# EUROPEAN PATENT SPECIFICATION

(11) **EP 0 586 390 B1**
(45) Date of publication and mention of the grant of the patent: **28.05.1997**
(21) Application number: 92907471.4
(22) Date of filing: 23.03.1992
(51) Int. Cl.: C08F 10/00, C08F 4/651, C08F 4/654

(54) **COARSE GRAINED POLYOLEFIN, PRODUCTION THEREOF AND A PROCATALYST CONTAINING A TRANSESTERIFICATION PRODUCT BETWEEN A LOWER ALCOHOL AND DIOCTYLPHTHALATE USED THEREFORE**
GROBKÖRNIGES POLYOLEFIN, VERFAHREN ZUR HERSTELLUNG DESSELBEN UND DAFÜR ANWENDBARE KATALYSATORVORLÄUFER, ENTHALTEND EIN UMESTERUNGSPRODUKT EINES NIEDRIGEN ALKOHOLS UND DIOKTYLPHTALATS
POLYOLEFINE A GROS GRAINS, PRODUCTION DE CETTE POLYOLEFINE ET PROCATALYSEUR CONTENANT UN PRODUIT DE TRANSESTERIFICATION ENTRE UN ALCOOL INFERIEUR ET DU DIOCTYLPHTALATE UTILISE A CET EFFET

(30) Priority: 09.05.1991 FI 912263
(43) Date of publication of application: 16.03.1994
(73) Proprietor: BOREALIS A/S, 2800 Lyngby (DK)
(72) Inventor: GAROFF, Thomas, SF-00840 Helsinki (FI); LEINONEN, Timo, SF-06750 Tolkkinen (FI); IISKOLA, Eero, SF-06100 Porvoo (FI)
(74) Representative: Dost, Wolfgang, Dr.rer.nat., Dipl.-Chem.
(86) International application number: FI9200082
(87) International publication number: WO9219658

(56) References cited:
- EP-A- 0 226 003
- EP-A- 0 488 537
- WO-A-87/07620
- DK-B- 160 256

## Description

The invention relates to a method for preparing polyolefins by polymerizing an olefin with the aid of a procatalyst composition, which has been prepared by contacting MgCl₂, a C₁-C₄ alcohol, a titanium compound and a phtalic acid ester.

The invention also relates to a polyolefin which has been obtained by polymerizing an olefin in the presence of a procatalyst, which has been prepared by contacting MgCl₂, a C₁-C₄ alcohol, a titanium compound and a phtalic acid ester, as well as a procatalyst composition usable for the preparation of a coarse-grained and an even-grained polyolefin, which has been prepared by contacting MgCl₂, a C₁-C₄ alcohol, a titanium compound, and a phtalic acid ester.

Olefins, especially α olefins, are often polymerized by means of a catalyst composition, in which the procatalyst consists of a compound of a transition metal of groups IV-VI of the periodic system, and the cocatalyst is a compound of a metal of groups I-III of the periodic system, which activates the procatalyst by reduction. The so-called Ziegler-Natta procatalyst has been further developed by using an inert carrier as a support of the transition metal compound, the transition metal compound being superposed on the inert carrier in order to improve the activity of the procatalyst as it catalyzes the polymerization reaction.

However, under the effect of this procatalyst composition, the asymmetrical olefin monomers are often polymerized into different stereoisomeric polymers, yielding for instance mixtures of isotactic, atactic and syndiotactic polymers, from which the desired stereoisomer has to be separated by means of washing and similar steps, which are often complicated. In order to prepare a polymer having a basically specific stereospecific form, for instance an isotactic polyolefin, out of an asymmetrical olefin monomer, the effect of the catalyst on the stereospecificity of the yielded product has been enhanced by adding a donor compound to the catalyst.

Owing to its specific steric structure, the donor compound promotes the settling of the monomer molecule into a given position in the catalyst particle at the end of the growing polymer molecule, and thus the molecule chain of the polymer gets a given stereisomeric structure and the polymer product obtained corresponds more or less to the desired product as a function of the selected donor compound.

There are two ways of adding the donor to the catalyst: a so-called internal donor is added already to the procatalyst mixture of the transition metal compound and the carrier, or then the donor is added to the mixture of the monomer and the catalyst component only in the polymerization reactor together with the cocatalyst, and in this case a so-called external donor is concerned. A donor compound may of course be used in both the steps, and then the donor may be the same or a different compound in the various steps.

All monomers are asymmetrical, i.e. stereospecifically polymerizable monomers, except ethene, the unsaturated carbons of which have hydrogen substituents, and also in the rare case in which all the secondary groups are identical, tetramethyl-ethylene for instance. A certain stereospecific form is desirable because the properties of the yielded polymer for a given purpose are enhanced, for example isotactic polyolefins are better crystallized, their bulk density is higher, their mechanical properties are better, being for instance more resistant, etc. The adhesion characteristics of the atactic form are usually better than with other tactic forms and thus they are suitable for glue implementations among others.

When polymerizing asymmetrical olefin monomers, i.e. when at least one of the groups connected to the carbon atoms bound by an unsaturated bond is different, the catalyst may comprise a compound enhancing the stereospecificty of the catalyst, i.e. an electron donor, which, due to its electron donor character, may be connected to some other catalyst structure, and due to its steric action, may guide the monomer molecule of the polymer chain into such a position, that the yielded polymer molecule has a stereospecific structure in some respect. Such donors are a great number of various organic compounds, such as esters, carboxylic acids, alcohols, ketones, aldehydes, nitriles, amides, amines, organic phosphor and silicon compounds, etc. These compounds also have other effects on the characteristics of the catalyst, one such being that the activity of the catalyst varies according to the donor used in each case. If the donor is a carboxylic acid ester, it is usually an aromatic carboxylic acid ester, e.g. benzoates, phtalates, toluates, anisates, etc. The optimal donors among these are dialkyl phthalates.

Thanks to the so-called replica process, the physical structure of the procatalyst carrier is reproduced throughout the procatalyst composition and eventually also in the polymer product, and this means that the morphology of the procatalyst composition is very important in view of the polymerization.

Combinations of various donors are also known in the field. Thus, the JP patent specifications 59172507, 59206409, 59206415, 59206416, 59206424, 60262804, 61103910 and 61108614 disclose a procatalyst composition, which has been prepared from MgCl₂, 2-ethyl hexylalcohol, titanium tetrachloride, di-isobutyl phthalate and in some cases from phtalic acid anhydride.

The patent family including the patent specifications DE 3 540 699, EP 226 003 and US 4 761 461, discloses a method for preparing propene polymers by means of a procatalyst composition, which has been obtained by contacting MgCl₂, alkanol, such as ethanol, phtalic acid ester, such as di-isobutyl phthalate, and titanium tetrachloride under given conditions at 90°C. The phtalic acid may be added either at the stage when MgCl₂ and ROH react with each other, or at the stage when the reaction product of MgCl₂ and alkanol is reacted with titanium tetrachloride. As a result, dibutylphthalate is attached to the MgCl₂ catalyst carrier.

The procatalysts and methods described above have affected the particle size and shape of the polymer product and the particle size distribution to a very small extent. Thus, a great amount of fine fraction has been produced, which is detrimental for the treatment of polyolefins.

The object of the invention is to provide an active and stereospecific procatalyst composition. Another object is to reduce the titanium and donor contents of the catalyst and thus of the polymer, since these bring about colour problems and aromaticity in the polymers. The purpose is in particular a catalyst and a method which allow to increase the particle size of the polymer and to reduce the share of its fine fraction.

The purposes of the invention have now been achieved with a new method for preparing polyolefins, which is mainly characterized by the features presented in the characterizing part of claim 1. The invention also relates to a new polyolefin, which is mainly characterized by the features presented in the characterizing part of claim 9, and a new procatalyst composition suitable for the preparation of coarse-grained and even-grained polyolefins, which is mainly characterized by the features presented in the characterizing part of claim 11.

Hence, it has been discovered, that when using a procatalyst composition prepared by contacting MgCl₂, C₁-C₄ alcohol, a titanium compound and phtalic acid ester, the particle size of the polyolefin product can be increased and the share of the fine fraction decreased by carrying out a transesterification between the C₁-C₄ alcohol and the phtalic acid ester during the preparation of the procatalyst, and by selecting dioctyl phthalate (DOP) as phtalic acid ester.

In the polymerization method according to the invention, the MgCl₂ carrier of the used procatalyst composition may be used as such or combined with silica, e.g. by absorbing a solution or slurry containing MgCl₂ into the silica. It is also important that the MgCl₂ used is clean and anhydrous.

The alcohol used in the method may be any C₁-C₄ alcohol. Advantageous alcohols are methanol and ethanol, especially ethanol.

Since, under the effect of the so-called replica process, the physical structure of the catalyst carrier is reproduced throughout the catalyst composition, and this is again reproduced in the yielded polymer product, it is crucial to make the physical structure of the carrier, i.e. the morphology, advantageous, in other words, similar to the desired product. This can be achieved by using two different procedures, which may of course be combined: chemically, i.e. by treating the carrier with a specific or a number of specific chemicals, or physically, i.e. by grinding the carrier in a ball mill or a jet blowing mill.

One may also proceed by first making an adduct between the carrier, in this case expressly MgCl₂, and a C₁-C₄ alcohol, advantageously ethanol, and melting the adduct, injecting the melt by gas into a cooled solvent or a cooled gas, whereby the adduct is crystallized into a morphologically advantageous form, and this crystallized adduct is used as a catalyst carrier (cf. FI 862459).

The titanium compound used for the preparation of the procatalyst composition of the method according to the invention is advantageously an organic or inorganic titanium compound with the oxidation degree 3 or 4. When needed, the titanium compound can be admixed with other transition metal compounds, such as vanadium, zirkonium, chromium, molybdene, volfram compounds. The titanium compound is usually halogenide or oxyhalogenide, an organic metal halogenide or a purely metalorganic compound, in which cnly organic ligands have been bound to the transition metal. Titanium halogenides, in particular TiCl₄ are especially advantageous.

The phtalic acid ester used in the method is dioctyl phthalate, since only this substance yields the desired coarseness and low fine fraction content of the polymer product. The advantages are unexpected and differ from the results yielded by other phtalic acid esters. It is also advantageous that the dioctyl phthalate acts as a so-called electron donor of the catalyst composition with the purpose to improve the activity and/or stereospecificty of the obtained polymer. In the synthesis, the molar ratio of the dioctyl phthalate to the magnesium halogenide is advantageously of the order of about 0.2.

The transesterification can be accomplished e.g. by choosing a pair of phtalic acid ester - C₁-C₄ alcohol which is transesterified under normal preparation conditions, either spontaneously or by means of a catalyst that does not damage the procatalyst composition. However, it is often necessary to apply a raised temperature in order to bring about the transesterification. In this case, the transesterification is carried out at a temperature in the range of 110-150°C and preferably in the range of 130-140°C.

Since the boiling point of liquid TiCl₄ under normal pressure is about 136°C, the treatment by means of this, i.e. the so-called titanization, can normally be performed only at a temperature lower than this. Given that hydrocarbon solvents such as heptane, hexane or pentane are usually used as a titanization medium, and these have a markedly lower boiling point, the titanization temperature is below 100°C in practice, a temperature at which no transesterification takes place. Thus, in order to produce a transesterification, solvents boiling at a higher temperature should advantageously be applied, for instance nonane (boiling point 151°C) and decane (boiling point 174°C) are recommended. Thus the boiling point of TiCl₄ is approached and even exceeded in terms of the titanization temperature, allowing a simultaneous transesterification reaction.

According to one embodiment, the transesterification takes place so that the adduct of magnesium chloride and C₁-C₄ alcohol MgCl₂*nR₁OH, in which n is 1-6, is treated with a titanium compound, e.g. is titanized with TiCl₄, apparently generating the following reaction:

(1) MgCl₂*nR₁OH + nTiCl₄ = MgCl₂*nTiCl₃OR₁ + nHCl

As the donor, i.e. phtalic acid ester, is added to this titanized carrier, an adduct formed by all the components is probably produced:

(2) MgCl₂*nTiCl₃OR₁ + nR₃COOR₂ = MgCl₂*nTiCl₃OR₁*nR₃COOR₂

As this adduct can be transesterified at a temperature above 100°C and advantageously above 130°C, the ester groups R₁ and R₂ change places:

(3) MgCl₂*nTiCl₃OR₁*nR₃COOR₂ = MgCl₂*nTiCl₃OR₂*nR₃COOR₁

As the catalyst residue is removed by extracting, an adduct of the carrier and the ester donor is obtained, in which the group deriving from the ester alcohol has changed:

(4) MgCl₂*nTiCl₃OR₂*nR₃COOR₁ = MgCl₂*nR₃COOR₁ + nTiCl₃OR₂

In case sufficient titanium remains on the carrier, it will act as an active element of the procatalyst.

Otherwise the titanization is renewed after the above treatment in order to ensure a sufficient titanium concentration and thus an activity. The titanium separation of formula (4) relates to the inactive part of the titanium.

Consequently, a procatalyst composition for the polymerization of olefins has been provided in the present invention, the composition having a low titanium and donor content with regard to the activity of the catalyst. According to one embodiment, the procatalyst composition contains 2.0% by weight of Ti at the most. Its molar ratio donor/mg is advantageously in the range of 0.03-0.06 and/or its donor concentration in the range of 4-6% by weight. The phtalic acid ester alxocy group has 8 carbon atoms, whereby the activity of the procatalyst composition is advantageously about 800 kg PP/g Ti when using triethyl aluminium as a catalyst and cyclohexylmethyl dimethcxysilane as an external donor.

The procatalyst composition for the polymerization of olefins according to the invention is advantageously prepared
a) by reacting the adduct of MgCl₂ and C₁-C₄ alcohol with the titanium compound,
b) by reacting the product of step a) with dioctyl phthalate under conditions in which the transesterification of dioctyl phthalate and C₁-C₄ alcohol takes place,
c) by washing the product,
d) by reacting the end product of step c) with the titanium compound (i.e. a second treatment).

In the polymerization method according to the invention, the polymerization is advantageously carried out in the presence of an organometallic cocatalyst, such as trialkyl aluminium (e.g. triethyl aluminium), and advantageously of an external donor similar to cyclohexylmethyl dimethoxysilane. The polymer produced according to the invention contains a small amount of titanium and donor, among others, and resembles morphologically a relatively coarse catalyst composition. Propene is an advantageous olefin monomer.

According to a preferred embodiment of the invention, the catalyst and/or polymer particles are formed by agglomerating a more finely divided material. The catalyst particles produced advantageously have a size distribution such that 90% by weight has an average diameter above 200 µm. The average diameter of the corresponding polymer particles is advantageously of the order of 1-2 mm, particles having a diameter under 1 mm being preferably absent.

An olefin polymerization method is described as an exemplified case below, in which propene is polymerized with a catalyst composition, in which a spray-crystallized MgCl₂ x 3 EtOH adduct is used as a carrier, which has subsequently been titanized with TiCl₄ in a hydrocarbon solvent in the presence of di-alkyl phthalates of various lengths. By means cf the procatalyst composition and the trialkyl aluminium cocatalyst (triethyl aluminium, TEA) thus obtained as well as of an external donor (cyclohexyl methoxy dimethylsilane, CMMS) the propene was polymerized in a hydrocarbon solvent. If a sufficiently high titanizing temperature is applied, a transesterification will take place between the ethoxy groups deriving from the carrier-adduct and the long alkyl groups of the donor, yielding diethyl phthalate (DEP) as a donor compound. The following examples are merely intended to illustrate the invention.

### Examples

### Examined donors

5 donors were examined in the test series. The donors are given in table 1. The donors examined were propylhexyl phthalate (PrHP), dioctyl phthalate (DOP), di-isodecyl phthalate (DIDP) and ditridecyl phthalate (DTDP). Di-isobutyl phthalate (DIBP) was also included in the test series.

**Table 1**

| Examined internal donors | | | | |
|---|---|---|---|---|
| Test Length of the alkyl Donor group | | | Molar mass g/mol | Density g/ml |
| 1 | 4 | DIBP | 278 | 1,00 |
| 2 | 6 | PrHP | 292 | 0,95 |
| 3 | 8 | DOP | 390 | 0,96 |
| 4 | 10 | DIDP | 446 | 0,96 |
| 5 | 13 | DTDP | 530 | 0,91 |

### Catalyst synthesis

0.1 moles of MgCl₂ x 3 EtOH was suspended under inert circumstances in 250 ml of decane in a reactor. The solution was cooled to a temperature of -15°C and 300 ml of cold TiCl₄ was added. This was followed by a controlled heating to a temperature of +20°C. At this temperature, 0.02 moles of internal donor was added. In all the catalyst syntheses, the molar ratio between the donor and MgCl₂ was 0.2. When all the synthesis reagents were present, the temperature was raised to 135°C. Both the first and the second titanization were carried out at this temperature. The catalyst synthesis was ended by performing a normal washing of the reaction mixture.

In order to investigate the particle size of the produced procatalyst, the particle size distribution of the product was measured and each sample was microscopically photographed. In addition, the chemical composition of the procatalyst was measured by analyzing their Ti, Mg and donor contents. In order to examine the changes in the crystal structure, X-ray diffraction spectrums were also taken.

### Test polymerization

All the catalysts were submitted to a test polymerization under the following polymerizing conditions. A 2 lₓ bench reactor was used as a reaction vessel. 20-30 mg of procatalyst was used in the test polymerization. This amount was mixed with 620 µl of triethyl aluminium and 200 µl of a 25% solution of CMMS in 30 ml of heptane. The polymerizations were carried out at a temperature of +70°C and under a propene monomer pressure of 10 bar. The partial pressure of hydrogen was 0.2 bar during the polymerization. The polymerization lasted 3 hours. At the beginning of the test, the prepolymerization took place during the 10 minutes in the course of which the temperature and the pressure reached the desired polymerization conditions. The activity was measured on the basis of the polymerization yield. The soluble portion of the polymer was measured by evaporating a measured portion from the polymerization solution. Under these standard polymerization conditions, a polymer material was prepared, the MFR of which was approx. 8.

### Characterization of the polymerization batches

The bulk density and particle size distribution (PSD) of all the polymerization drives were measured. The isotacticity index was measured with the help of heptanelution and the isotacticity was determined on the basis of the results obtained from the evaporation residue measurements. The melt viscosity was measured at a temperature of 230°C by using a weight of 2.16 kg. All the polymerization batches were microscopically photographed in view of further documentation and comparisons. In order to characterize the melt behavior of the material, differential scanning calorimetric curves (DSC curves) were carried out. The specific area and the pore volume distribution were measured with the aid of an Hg porosimetric equipment.

### Results

Table 2 presents the symbols of all the catalysts and the corresponding polymers.

**Table 2**

| Symbols of the catalysts and polymers used in the study | | |
|---|---|---|
| Alkyl group length | Catalyst symbol | Polymer symbol |
| 4 | C-C-4 | 1 PP-C-4 |
| 6 | C-C-6 | 2 PP-C-6 |
| 8 | C-C-8 | 3 PP-C-8 |
| 10 | C-C-10 | 4 PP-C-10 |
| 13 | C-C-13 | 5 PP-C-13 |

### Titanium content of the catalyst

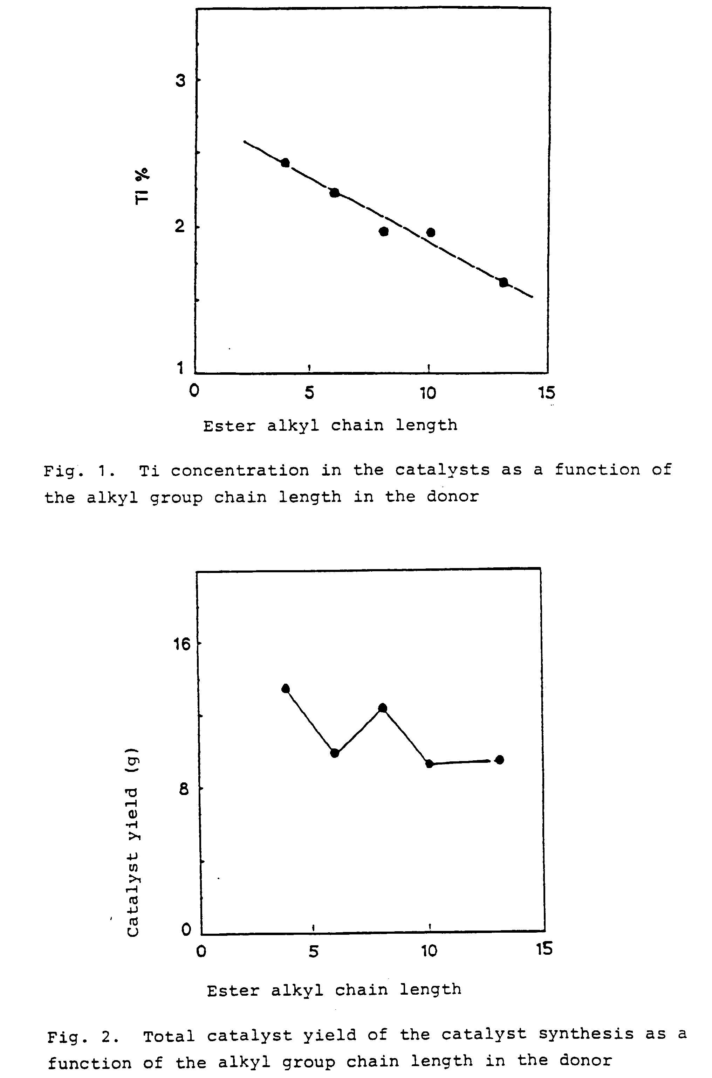

Table 3 indicates the magnesium and titanium contents of the catalysts. The titanium content is also presented in figure 1. The results showed that, with a substantially constant Mg content, a systematic decrease of the Ti content was observed in the catalyst series. The longer the alkyl chain of the alcoxy group of the electron donor, the smaller the Ti content of the final procatalyst. The Ti content of the last catalyst in the range was 1.6% by weight. This is a 60% lower value than the 4% obtained in the standard synthesis and up to 30% lower than the titanium content found in commercial high yield catalysts. These results showed that the combination of transesterification and the washing effect of TiCl₃ x OEt is enhanced by using higher phtalic acid esters.

**Table 3**

| Mg and Ti contents of the catalysts | | |
|---|---|---|
| Alkyl chain length | Mg (%) | Ti (%) |
| 4 | 18.1 | 2.4 |
| 6 | 20.8 | 2.2 |
| 8 | 22.0 | 1.9 |
| 10 | 20.0 | 1.9 |
| 13 | 17.3 | 1.6 |

### Catalyst yield of the catalyst synthesis

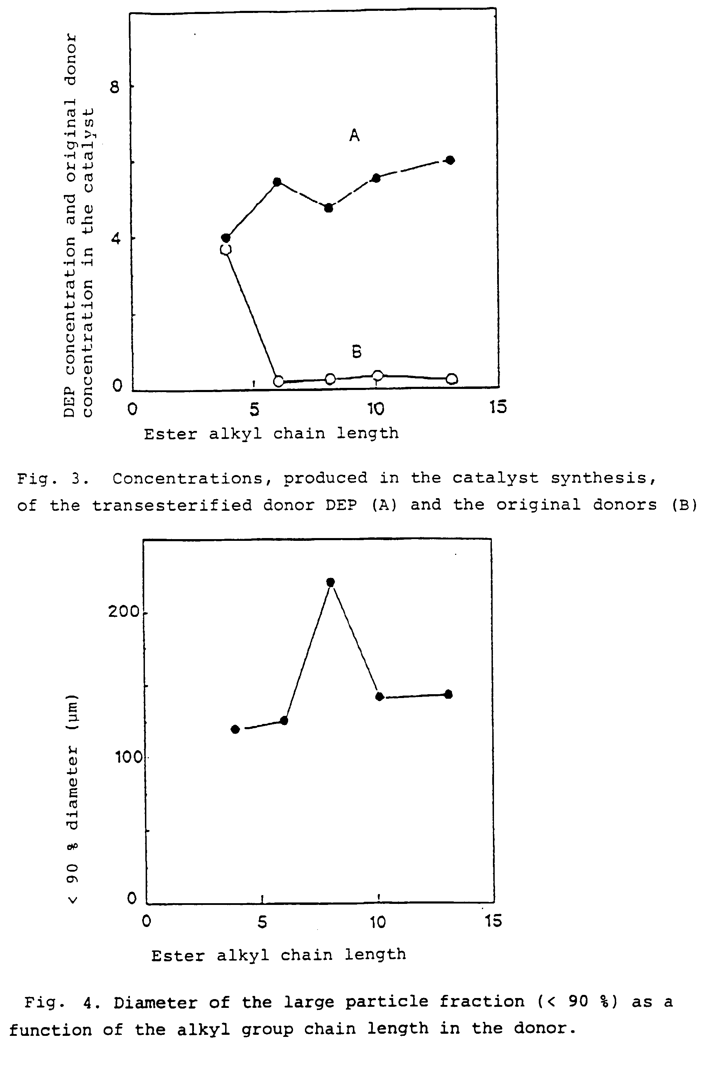

Table 4 indicates the respective catalyst yields of each catalyst synthesis, and the results are graphically presented in figure 2. The same trend can be observed as in the first measurement, i.e. as the phtalic alkyl chain increases and the titanium content decreases, the catalyst yield also decreases. The yield is very slightly reduced, only 25%, which is explained by the decreased TiCl₄ content of the catalyst and the weight reduction produced by the replacement of an electron donor with a high molar mass by one with a lower molar mass. The reduced catalyst yield is also explained by the reduction of the total donor content.

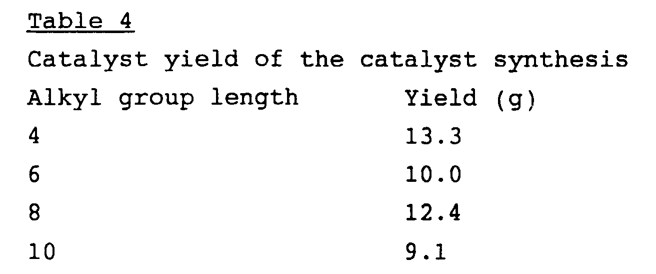

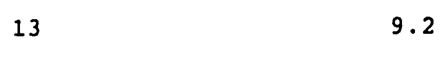

### Donor content of the catalysts

The donor composition of the catalysts was measured by liquid chromatography by using the HPLC method. The results are listed in table 5 and are graphically presented in figure 3. In all the catalysts, a small fraction of mixed esters and a small fraction of phtalic acid anhydride were observed. As seen in figure 3, the transesterification was not complete for the first catalyst of the test series. The transesterification degree of DIBP was only 70%. This implies that DIBP is not completely transesterified at a temperature of 135°C. In all the other syntheses, the transesterification was complete. Only traces of the original ester were found in their products. The amount of transesterified diethyl phthalate (DEP) found in the catalysts was essentially constant and near 5%. This equals a D/Mg ratio of 0.03-0.04 (D = donor), which is even a lower value than the one obtained as DIBP was transesterified at a temperature of 143°C.

These results show that the transesterification is improved if longer alkyl chains are used in the phtalic acid esters. They also show that a low molar ratio electron donor/MgCl₂ is obtained.

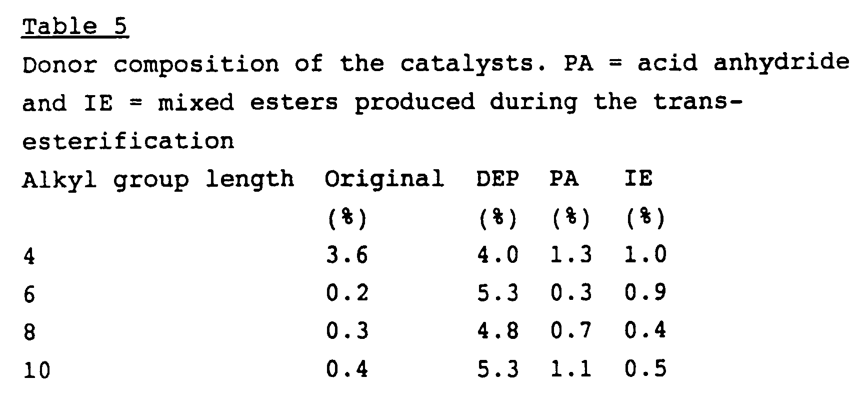

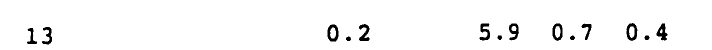

### Particle size distribution of the catalysts (PSD)

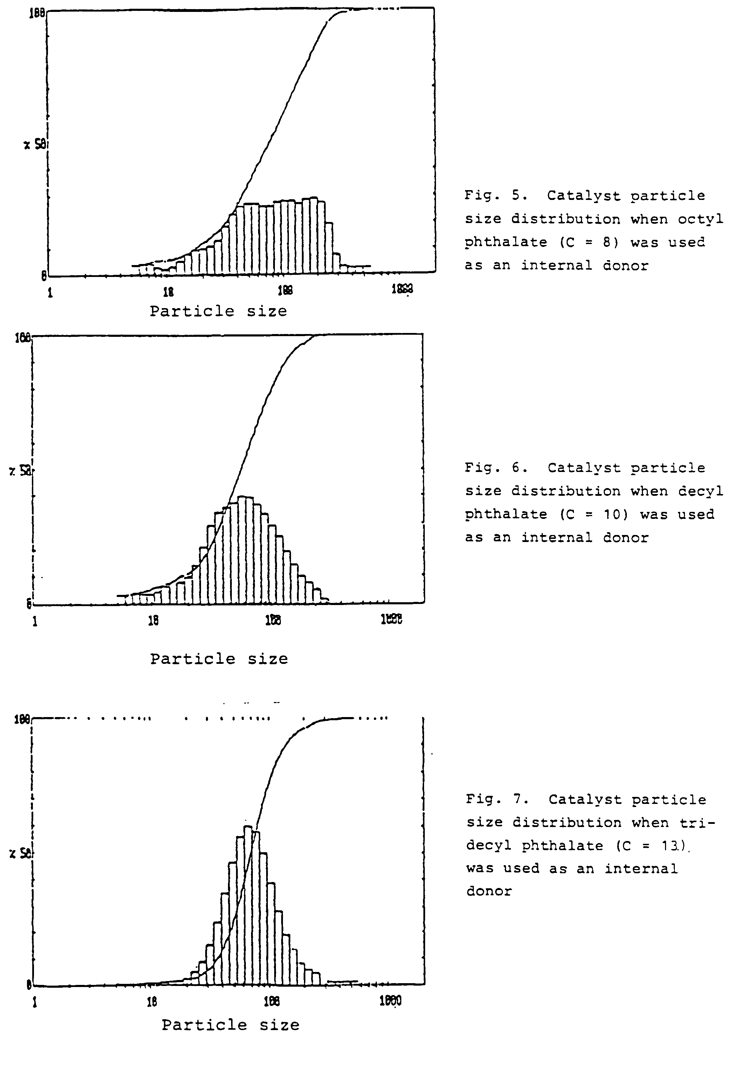

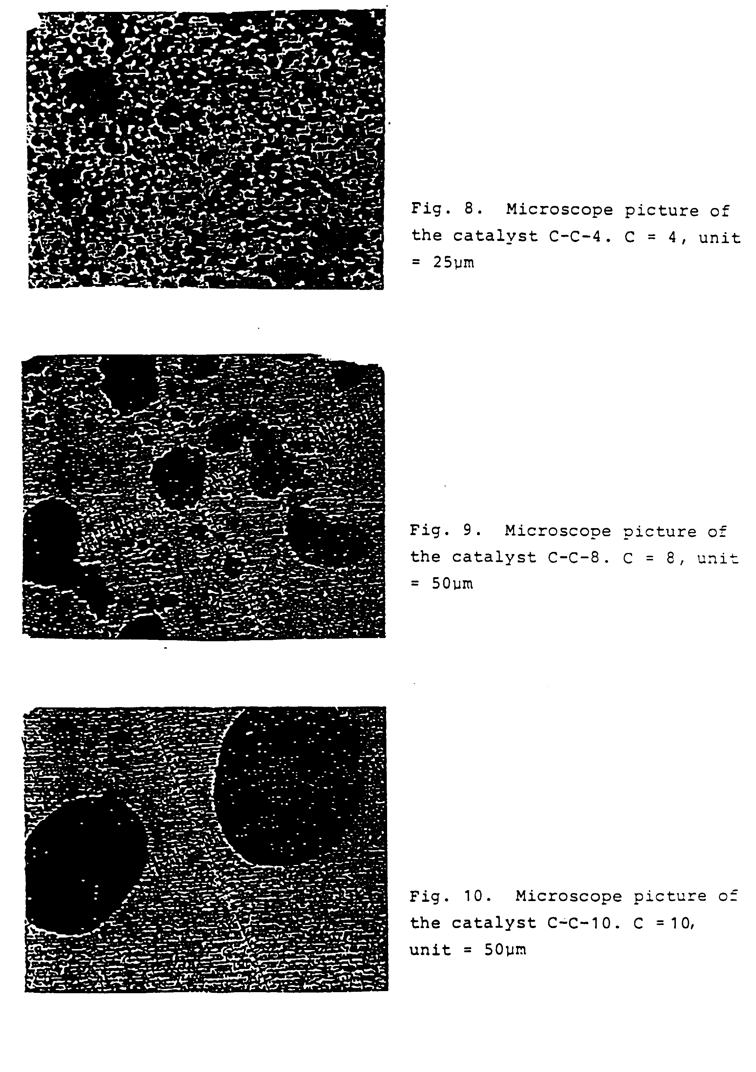

The PSD of the catalysts was also measured and the results are given in table 6. Figure 4 shows the share in which more than 90% of the particles had an average particle diameter as a function of the alkyl chain length. The results show that a change of the donor compositions entails a marked change of the PSD. At the same time it was noted that the catalyst particles agglomerate as higher phtalic acid esters are being used. The effect was most drastic when dioctyl phthalate was used, appearing as a noticeable agglomeration. This agglomeration appears in the PSD curves of figures 5, 6 and 7, as well as the microscopic pictures in figures 8, 9 and 10. The results also showed that the agglomeration decreased again when higher phtalic acid esters were used. By using DIDP (C = 10), very beautifully shaped catalyst particles were obtained, having a diameter of about 140 µm. This appears from figure 10.

**Table 6**

| Particle size distribution of the catalysts | | | |
|---|---|---|---|
| Alkyl group length | D (0.9)µm | D (0.5)µm | D (0.1)µm |
| 4 | 117 | 62 | 34 |
| 6 | 127 | 68 | 36 |
| 8 | 218 | 76 | 17 |
| 10 | 138 | 56 | 18 |
| 13 | 140 | 69 | 36 |

### X-ray diffraction spectrums of the catalysts

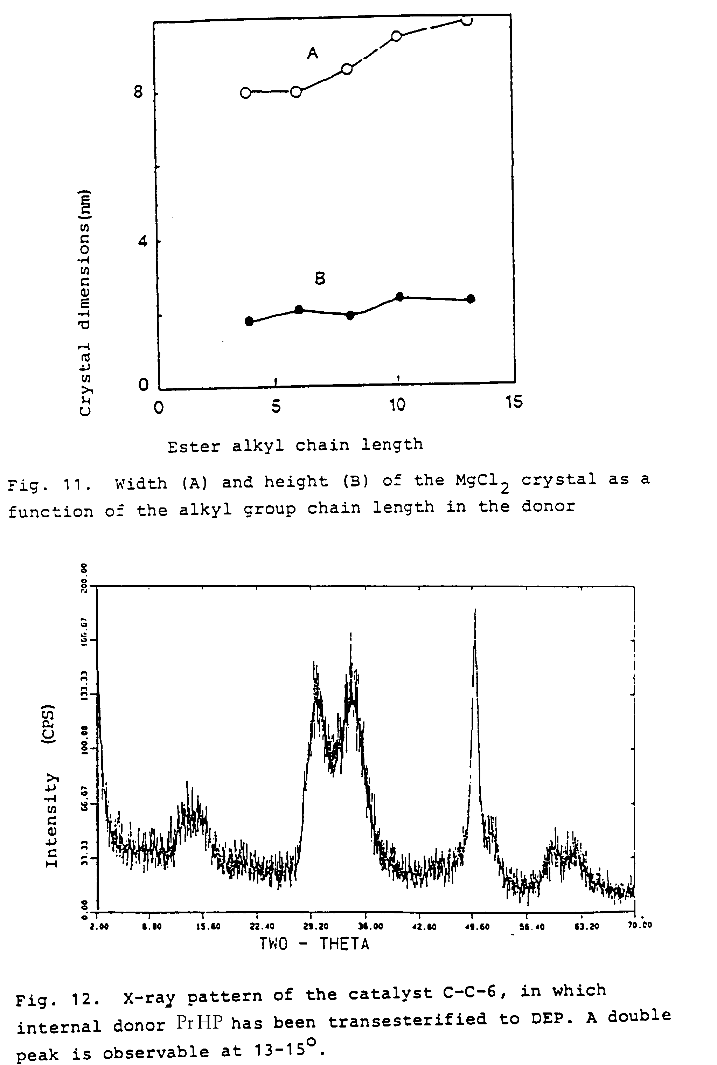

The transesterification yielded a new procatalyst structure, which appears in the double peak at 13-15°. In order to observe the effect of higher phtalic esters X-ray diagrams were taken of all the catalysts in the test series. Table 7 lists the crystal dimensions deduced from the diagrams and the results are also shown in figure 11. According to the results, the crystal was systematically broadened as the alkyl chain of the ester was lengthened. DTDP yielded 25% broader crystals than DIBP.

Figure 12 shows the X-ray diffraction spectrum of the catalyst C-C-6. According to the diagram, recrystallization appeared in the MgCl₂ crystal grating, showing as a sharpening of the crystal peak at 30° and 35°. The forming of the double peak at 13-15° can also be seen.

**Table 7**

| Crystal dimensions of the MgCl₂ materials of the catalysts | | | |
|---|---|---|---|
| Section levels | | Width(nm) | Growth (%) |
| Alkyl group length | Height(nm) | | |
| 4 | 1.8 | 7.9 | 0 |
| 6 | 2.1 | 7.9 | 0 |
| 8 | 1.9 | 8.4 | 6 |
| 10 | 2.3 | 9.3 | 18 |
| 13 | 2.2 | 9.8 | 24 |

### Area and pore volume of the catalysts

The area and the pore volume of the catalysts were measured. The results are listed in table 8. According to these, the area of the catalysts remained almost constant regardless of the donor used in the synthesis. The specific area obtained was of the order of about 300 m²/g. Conversely, the pore volume increased as donors with longer chains were used. In the last catalyst of the series an increase of up to 60% was observed. The increase of the pore volume can partly be explained by the agglomerizing of the catalyst particles.

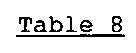

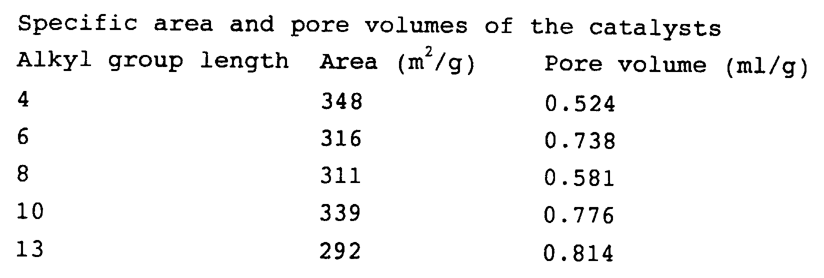

### Activity of the catalysts

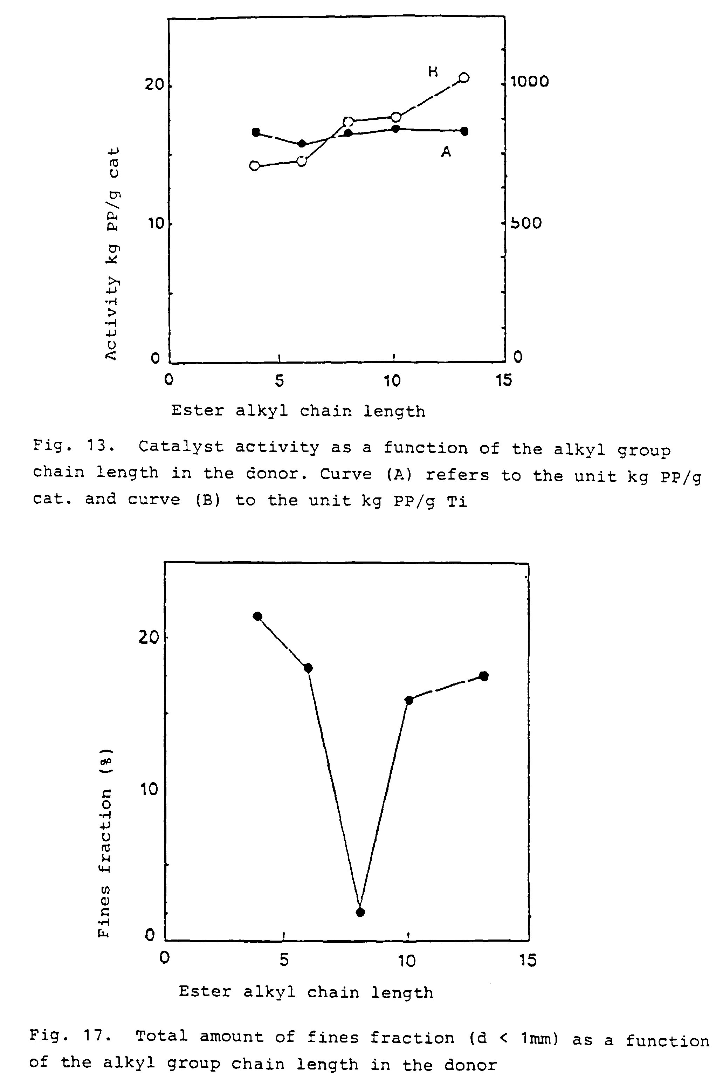

All the catalysts were test polymerized in the conditions described above. The results are given in table 9 and figure 13. The activity based on the weight of the catalyst and the polymer remained constant for the entire catalyst range and was about 16 kg/g of cat. Expressed as the unit kg PP/g of Ti, the activity increased systematically. This was due to the fact that the Ti content decreased accordingly as higher phtalic acid esters were used. Thus, an activity value of 1019 kg PP/g of Ti was obtained for the last catalyst in the range. When decane was used as an activating medium, the activity of the catalyst decreased slightly.

**Table 9**

| Activity of the catalysts | | |
|---|---|---|
| Alkyl group length | Activity (kg PP/g of cat.) | Activity (kg PP/g of Ti) |
| 4 | 16.6 | 692 |
| 6 | 15.6 | 709 |
| 8 | 16.2 | 853 |
| 10 | 16.6 | 874 |
| 13 | 16.3 | 1019 |

### Particle size distribution (PSD) of the polymers

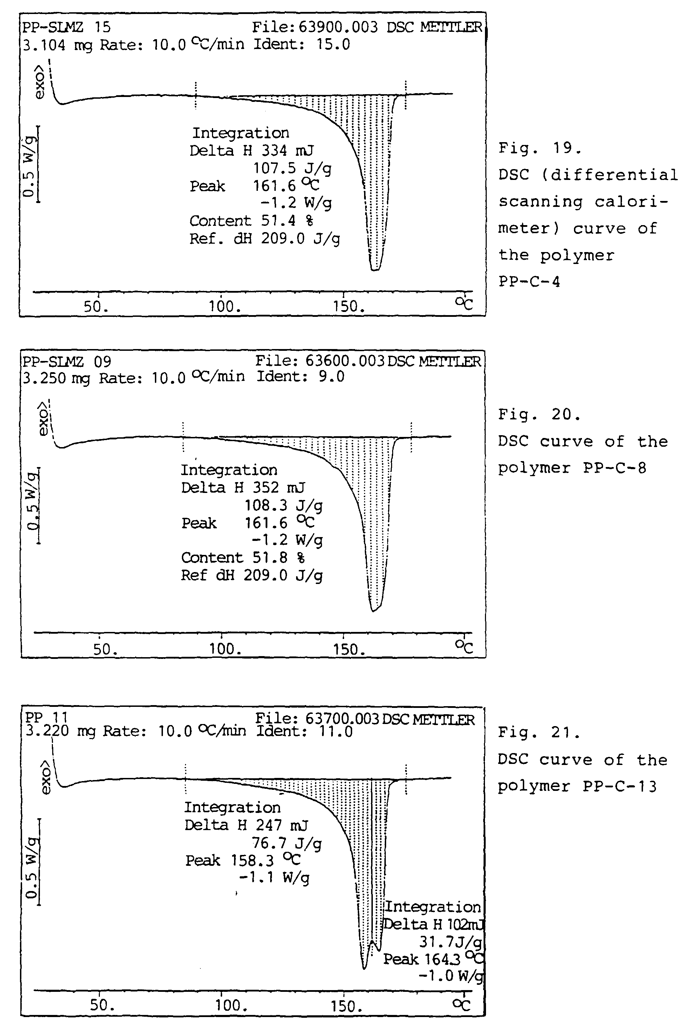

Table 10 shows the PSD of the polymers together with a fine fraction, i.e. the total amount of particles under 1 mm. The amount of the fine fraction is also graphically presented in figure 17.

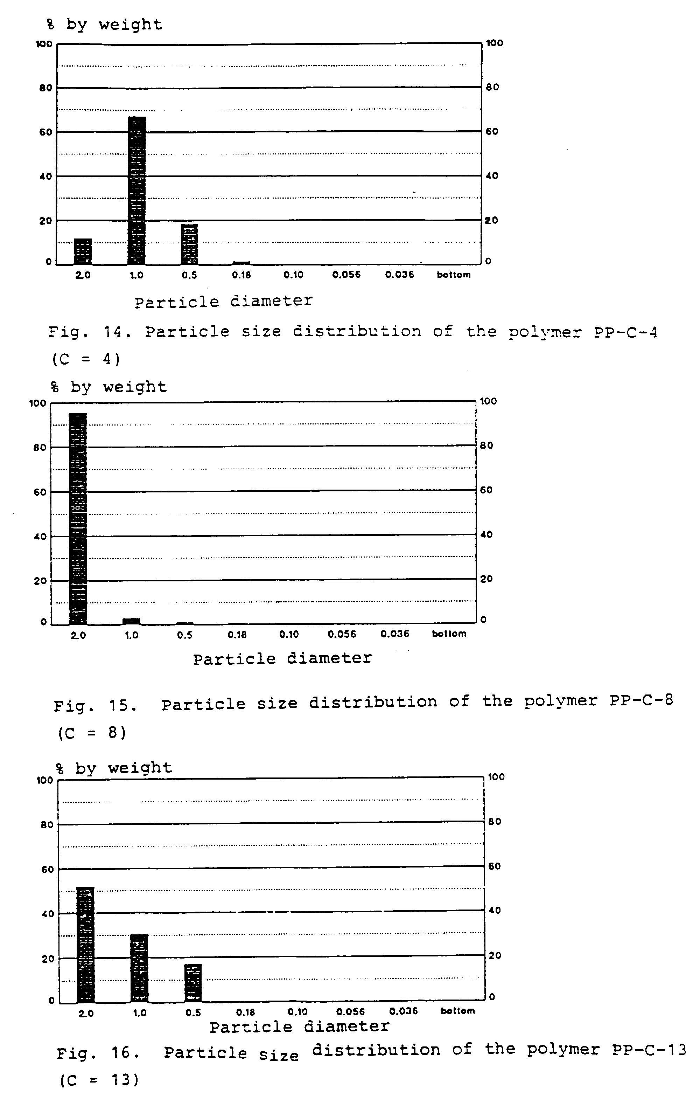

The PSFD results of the polymers follow the same pattern as the PSD results of the catalysts, i.e. a marked agglomerating effect was observed especially with DOP esters. When still greater chain lengths were used, the agglomerating trend decreased. This appears in the PSD diagrams of figures 14, 15 and 16. The share of the fine fraction (D < 1 mm) was generally high (> 15%), however for DOP is was practically non-existent. The absence of the fine fraction can be explained by the agglomerization in this case.

**Table 10**

| Particle size distribution of the polymers | | | | | | | |
|---|---|---|---|---|---|---|---|
| Alkyl content/number of C atoms | Share (% by weight) of the material having a diameter d (mm) within the following range | | | | | | |
| | d>2.0 | 2.0>d>1.0 | 1.0>d>0.5 | 0.5>d>0.18 | 0.18>d>0.1 | 0.1>d>0.056 | d<0.056 |
| 4 | 12.0 | 67.4 | 18.5 | 1.8 | 0.2 | 0.1 | 20.6 |
| 6 | 10.7 | 71.3 | 17.7 | 0.2 | 0.1 | 0.0 | 18.0 |
| 8 | 95.0 | 3.1 | 1.1 | 0.5 | 0.2 | 0.1 | 1.9 |
| 10 | 14.6 | 69.4 | 15.5 | 0.5 | 0.2 | 0.0 | 16.0 |
| 13 | 52.1 | 30.4 | 17.1 | 0.2 | 0.1 | 0.1 | 17.5 |

### Bulk density of the polymers

The bulk density decreased as higher phtalic acid esters were used in the transesterification synthesis. The results are listed in table 11 and presented in figure 18. According to the figure, the bulk density is actually a function of the agglomerating tendency. The more the polymer is agglomerated, the lower the bulk density. When DIBP esters are used, there is practically no agglomeration, whereby the bulk density will be 0.46 g/ml. If again DOP esters are used, a marked agglomeration will take place and the bulk density drops to 0.33 g/ml.

**Table 11**

| Bulk density of the polymers | |
|---|---|
| Alkyl group length | Bulk density (g/ml) |
| 4 | 0.46 |
| 6 | 0.44 |
| 8 | 0.33 |
| 10 | 0.37 |
| 13 | 0.39 |

### Melt viscosity of the polymers

The chain length of the ester did not have a great impact on the melt viscosity. The results are shown in table 12.

**Table 12**

| Melt viscosity of the polymers | |
|---|---|
| Alkyl group length | Melt viscosity (2.16 kg) |
| 4 | 10.5 |
| 6 | 9.3 |
| 8 | 10.0 |
| 10 | 7.3 |

### Molecular weight of the polymers

No systematic changes in the molecular weight distribution were observed as the esters changed. All the results are listed in table 13. The results correspond to the ones normally obtained in standard polymerization.

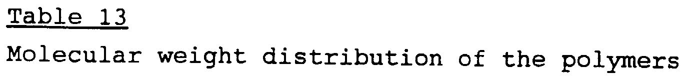

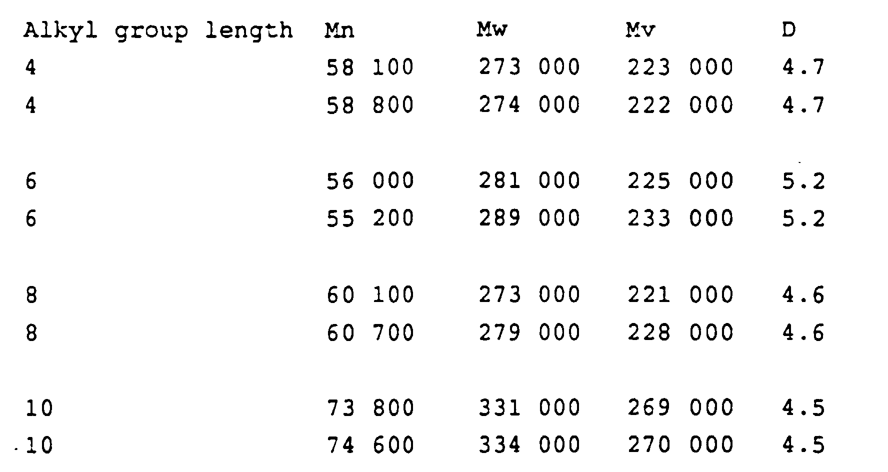

### DSC measuring results of the polymers

Table 14 presents a list of fusion points, crystallization points and crystallization percentages of the polymers. These measurements did not either reveal any systematic dependency of the esters used. The point of fusion is about 161°C and the crystallization temperature about 114°C. The crystallization was 51-52%. A number of fusion curves are presented in figures 19, 20 and 21.

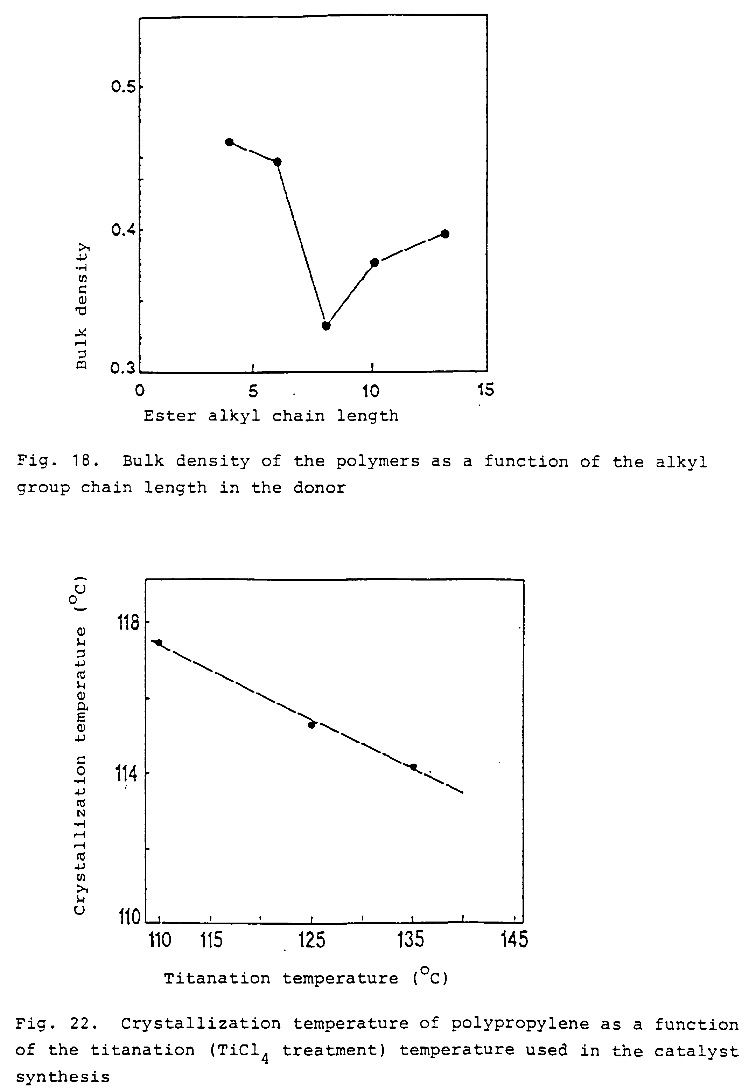

It can be generally noted that there is a correlation between the titanization temperature and the crystallization temperature of the catalyst. A higher titanization temperature yields a purer catalyst and a more homogenous polypropene. This again increases the crystallization of the polymer and reduces its crystallization temperature. Figure 22 presents a schematic view of the correlation between the titanization temperature of the catalyst and the crystallization temperature of the polymer.

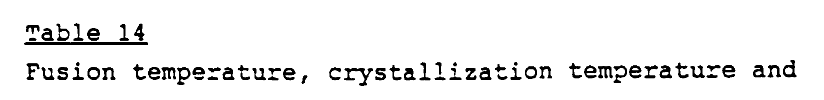

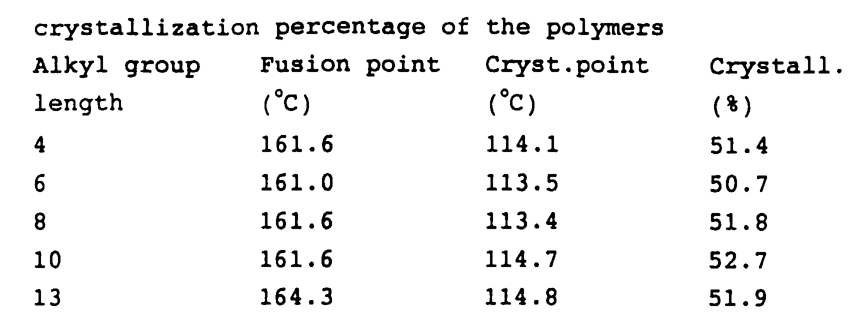

### Specific area and pore volume distribution of the polymers

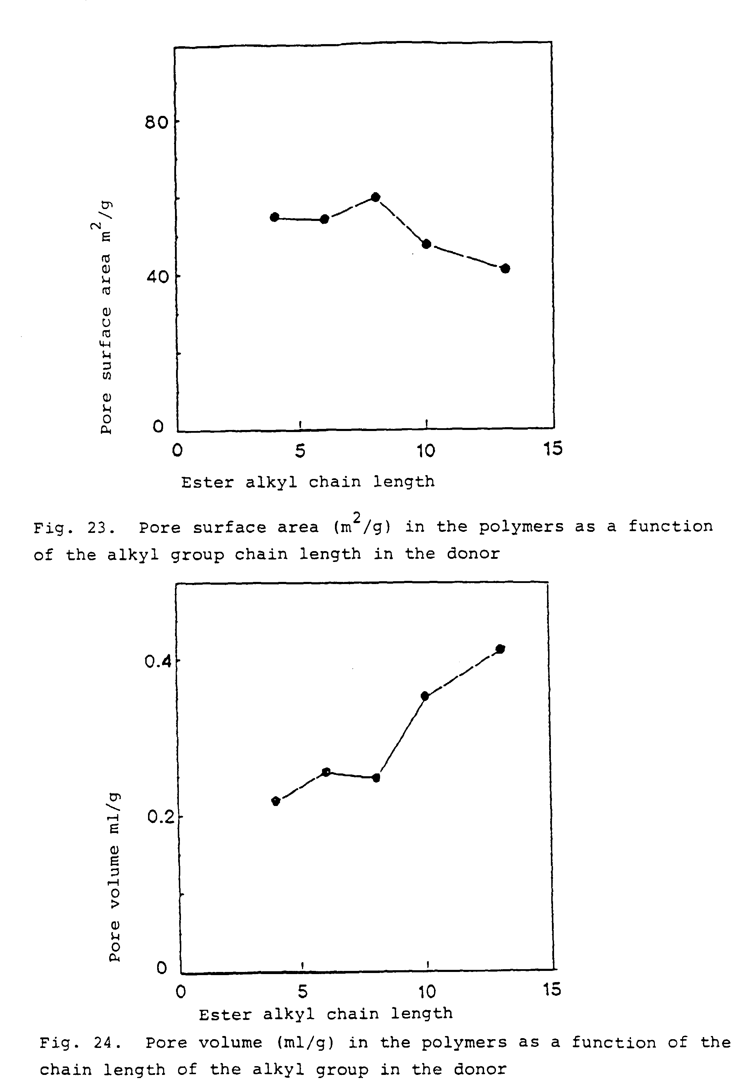

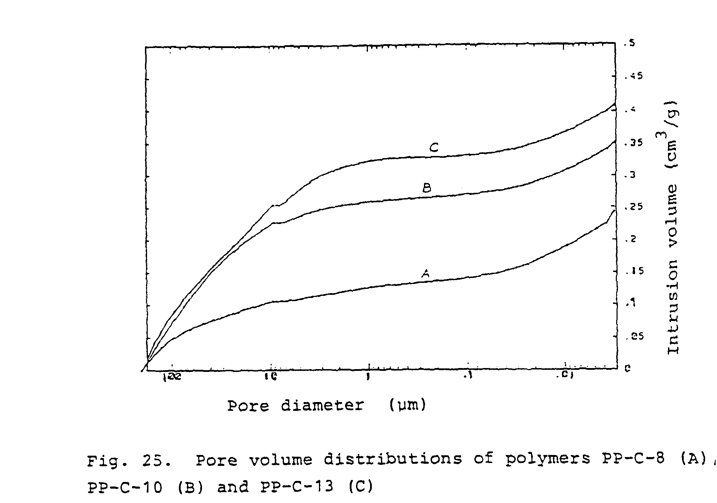

Table 15 gives the results of the area and pore volume measurements. The measurements were carried out by means of an Hg porosimeter. The results corresponded to the ones obtained with the corresponding catalysts. As shown in figure 23, the specific area of the pores decreases only slightly when higher phtalic acid esters are used in the transesterification synthesis. The pore volume, again, increased linearly according to the alkyl chain length of the phtalic acid ester, as in figure 24. The increase was about 100% for the last polymer of the range, compared to the first polymer of the range. According to figure 25, DIDP greatly increased the share of the macroporous fraction (10-100 µm), whereas DTDP increased the share of the micropores (1-10 µm).

**Table 15**

| Specific area and pore volume of the polymers, median diameter of the pores | | | |
|---|---|---|---|
| Alkyl group length | Area (m²/g) | Pore volume (ml/g) | Pore diameter (µm) |
| 4 | 53.5 | 0.22 | 1.2 |
| 6 | 52.4 | 0.25 | 4.9 |
| 8 | 58.5 | 0.24 | 1.5 |
| 10 | 46.0 | 0.35 | 26.3 |
| 13 | 41.2 | 0.41 | 18.8 |

## Claims

1. A method for producing polyolefins by polymerizing olefins by means of a procatalyst, which has been prepared by contacting MgCl₂, a C₁-C₄ alcohol, a titanium compound and a phtalic acid ester, **characterized** by using a procatalyst, which has been prepared by carrying out a transesterification between the C₁-C₄ alcohol and the phthalic acid ester at a temperature in the range of 110 to 150°C, and by selecting dioctyl phthalate (DOP) as the said phtalic acid ester.

2. A method according to claim 1, **characterized** in that the olefin used in the method is propene.

3. A method according to claim 1 or 2, **characterized** in that the C₁-C₄ alcohol is ethanol.

4. A method according to claim 1, 2 or 3, **characterized** in that the titanium compound is TiCl₄.

5. A method according to any of the preceding claims, **characterized** in that the olefin is polymerized by means of an organometallic cocatalyst.

6. A method according to claim 5, **characterized** in that the organometallic cocatalyst is trialkyl aluminium.

7. A method according to any of the preceding claims, **characterized** in that the olefin is polymerized by means of an external donor such as cyclohexylmethyl dimethoxysilane.

8. A method according to any of the preceding claims, **characterized** in that the polyolefin is prepared by agglomerization of the polyolefin material produced in the polymerization.

9. A polyolefin produced by the polymerization of olefin in the presence of a procatalyst, which has been prepared by contacting MgCl₂, a C₁-C₄ alcohol, a titanium compound and a phtalic acid ester, **characterized** in that it has a coarseness obtained by using a procatalyst, which has been produced by a transesterification of the C₁-C₄ alcohol and the phtalic acid ester at a temperature in the range of 110 to 150°C and by selecting dioctyl phthalate as the phtalic acid ester.

10. A polyolefin according to claim 9, **characterized** in that the average diameter of its particles is of the order of 1-2 mm, particles having a diameter under 1 mm being essentially absent.

11. A procatalyst composition usable for preparing polyolefins with a coarse and regular grain structure, the procatalyst composition having been produced by contacting MgCl₂, a C₁-C₄ alcohol, a titanium compound and a phtalic acid ester, **characterized** in that a transesterification has been carried out at a temperature in the range of 110 to 150°C between the C₁-C₄ alcohol and the phtalic acid ester and in that dioctyl phthalate (DOP) is used as the phtalic acid ester.

12. A procatalyst composition according to claim 11, **characterized** in that the transesterification has been carried out at a temperature in the range of 130°C to 140°C.

13. A procatalyst composition according to claim 11 or 12, **characterized** in that the transesterification has been carried out in nonane or decane.

14. A procatalyst composition according to claim 11, 12 or 13, **characterized** in that the C₁-C₄ alcohol is ethanol.

15. A procatalyst composition according to any of claims 11 to 14, **characterized** in that the titanium compound is TiCl₄.

16. A procatalyst composition according to any of claims 11-15, **characterized** in that it has been produced by
a) reacting an adduct of MgCl₂ and a C₁-C₄ alcohol with the titanium compound,
b) by reacting at a temperature in the range of 110 to 150°C the product of step a) with dioctyl phthalate (DOP) under conditions in which a transesterification takes place between the dioctyl phthalate and the C₁-C₄ alcohol,
c) by washing the product and
d) by reacting the product of step c) with a titanium compound.

17. A procatalyst composition according to any of claims 11-16, **characterized** in that 90% by weight of its particles have an average diameter with a length above 200 µm.

18. A procatalyst composition according to any of claims 11-16, **characterized** in that its particles are agglomerates.

## Patentansprüche

1. Verfahren zur Herstellung von Polyolefinen durch Polymerisieren von Olefinen mittels eines Prokatalysators, der hergestellt worden ist, indem MgCl₂, ein C₁-C₄-Alkohol, eine Titanverbindung und ein Phthalsäureester in Kontakt gebracht werden, gekennzeichnet durch die Verwendung eines Prokatalysators, der hergestellt worden ist, indem eine Umesterung zwischen dem C₁-C₄-Alkohol und dem Phthalsäureester bei einer Temperatur in dem Bereich von 110 bis 150°C durchgeführt wird und Dioctylphthalat (DOP) als der Phthalsäureester ausgewählt wird.

2. Verfahren nach Anspruch 1, dadurch gekennzeichnet, daß das in dem Verfahren verwendete Olefin Propen ist.

3. Verfahren nach Anspruch 1 oder 2, dadurch gekennzeichnet, daß der C₁-C₄-Alkohol Ethanol ist.

4. Verfahren nach Anspruch 1, 2 oder 3, dadurch gekennzeichnet, daß die Titanverbindung TiCl₄ ist.

5. Verfahren nach einem der vorhergehenden Ansprüche, dadurch gekennzeichnet, daß das Olefin mittels eines metallorganischen Cokatalysators polymerisiert wird.

6. Verfahren nach Anspruch 5, dadurch gekennzeichnet, daß der metallorganische Cokatalysator Trialkylaluminium ist.

7. Verfahren nach einem der vorhergehenden Ansprüche, dadurch gekennzeichnet, daß das Olefin mittels eines externen Donors wie Cyclohexylmethyldimethoxysilan polymerisiert wird.

8. Verfahren nach einem der vorhergehenden Ansprüche, dadurch gekennzeichnet, daß das Polyolefin durch Agglomeration des Polyolefinmaterials hergestellt wird, das bei der Polymerisation erzeugt wird.

9. Polyolefin, erzeugt durch die Polymerisation eines Olefins in Gegenwart eines Prokatalysators, der durch Inkontaktbringen von MgCl₂, einem C₁-C₄-Alkohol, einer Titanverbindung und einem Phthalsäureester hergestellt worden ist, dadurch gekennzeichnet, daß dieses eine Grobkörnigkeit besitzt, erhalten durch Verwendung eines Prokatalysators, der hergestellt worden ist durch eine Umesterung des C₁-C₄-Alkohols und des Phthalsäureesters bei einer Temperatur in dem Bereich von 110 bis 150°C und durch Auswählen von Dioctylphthalat als dem Phthalsäureester.

10. Polyolefin nach Anspruch 9, dadurch gekennzeichnet, daß der durchschnittliche Durchmesser seiner Partikel in der Größenordnung von 1-2 mm ist, wobei Partikel mit einem Durchmesser unter 1 mm im wesentlichen nicht vorkommen.

11. Prokatalysatorzusammensetzung, die zur Herstellung von Polyolefinen mit grobkörniger und regelmäßiger Kornstruktur verwendbar ist, wobei die Prokatalysatorzusammensetzung durch Inkontaktbringen von MgCl₂, einem C₁-C₄-Alkohol, einer Titanverbindung und einem Phthalsäureester erzeugt worden ist, dadurch gekennzeichnet, daß die Umesterung bei einer Temperatur in dem Bereich von 100 bis 150°C zwischen dem C₁-C₄-Alkohol und dem Phthalsäureester durchgeführt worden ist, und das Dioctylphthalat (DOP) als der Phthalsäureester verwendet wird.

12. Prokatalysatorzusammensetzung nach Anspruch 11, dadurch gekennzeichnet, daß die Umesterung bei einer Temperatur in dem Bereich von 130°C bis 140°C durchgeführt worden ist.

13. Prokatalysatorzusammensetzung nach Anspruch 11 oder 12, dadurch gekennzeichnet, daß die Umesterung in Nonan oder Decan durchgeführt worden ist.

14. Prokatalysatorzusammensetzung nach Anspruch 11, 12 oder 13, dadurch gekennzeichnet, daß der C₁-C₄-Alkohol Ethanol ist.

15. Prokatalysatorzusammensetzung nach einem der Ansprüche 11 bis 14, dadurch gekennzeichnet, daß die Titanverbindung TiCl₄ ist.

16. Prokatalysatorzusammensetzung nach einem der Ansprüche 11-15, dadurch gekennzeichnet, daß sie erzeugt worden ist durch
a) Umsetzen eines Adduktes von MgCl₂ und einem C₁-C₄-Alkohol mit der Titanverbindung,
b) Umsetzen des Produkts aus Schritt a) bei einer Temperatur in dem Bereich von 100 bis 150°C mit Dioctylphthalat (DOP) unter Bedingungen, bei denen eine Umesterung zwischen dem Dioctylphthalat und dem C₁-C₄-Alkohol stattfindet,
c) Waschen des Produkts und
d) Umsetzen des Produkts aus Schritt c) mit einer Titanverbindung.

17. Prokatalysatorzusammensetzung nach einem der Ansprüche 11-16, dadurch gekennzeichnet, daß 90 Gew.-% ihrer Partikel einen durchschnittlichen Durchmesser mit einer Länge über 200 µm besitzen.

18. Prokatalysatorzusammensetzung nach einem der Ansprüche 11-16, dadurch gekennzeichnet, daß deren Partikel Agglomerate sind.

## Revendications

1. Procédé pour produire des polyoléfines en polymérisant des oléfines à l'aide d'un procatalyseur, que l'on a préparé en mettant en contact MgCl₂, un alcool en C₁ à C₄, un composé du titane et un ester de l'acide phtalique, caractérisé par l'utilisation d'un procatalyseur, que l'on a préparé en effectuant une transestérification entre l'alcool en C₁ à C₄ et l'ester de l'acide phtalique à une température comprise entre 110 et 150°C, et en choisissant le phtalate de dioctyle (DOP) comme ledit ester de l'acide phtalique.

2. Procédé selon la revendication 1, caractérisé en ce que l'oléfine utilisée dans le procédé est le propène.

3. Procédé selon la revendication 1 ou 2, caractérisé en ce que l'alcool en C₁ à C₄ est l'éthanol.

4. Procédé selon la revendication 1, 2 ou 3, caractérisé en ce que le composé du titane est TiCl₄.

5. Procédé selon l'une quelconque des revendications précédentes, caractérisé en ce que l'oléfine est polymérisée à l'aide d'un cocatalyseur organométallique.

6. Procédé selon la revendication 5, caractérisé en ce que le cocatalyseur organométallique est le trialkyl-aluminium.

7. Procédé selon l'une quelconque des revendications précédentes, caractérisé en ce que l'oléfine est polymérisée à l'aide d'un donneur externe tel que le cyclohexylméthyldiméthoxysilane.

8. Procédé selon l'une quelconque des revendications précédentes, caractérisé en ce que la polyoléfine est préparée par agglomération de la matière polyoléfinique produite dans la polymérisation.

9. Polyoléfine produite par la polymérisation d'oléfine en présence d'un procatalyseur, que l'on a préparé en mettant en contact MgCl₂, un alcool en C₁ à C₄, un composé du titane et un ester de l'acide phtalique, caractérisé en ce qu'elle possède une grosseur obtenue en utilisant un procatalyseur, qui a été produit par une transestérification de l'alcool en C₁ à C₄ et de l'ester de l'acide phtalique à une température comprise entre 110 et 150°C et en choisissant le phtalate de dioctyle comme l'ester d'acide phtalique.

10. Polyoléfine selon la revendication 9, caractérisée en ce que le diamètre moyen de ses particules est de l'ordre de 1 à 2 mm, les particules ayant un diamètre inférieur à 1 mm étant essentiellement absentes.

11. Composition procatalytique utilisable pour préparer des polyoléfines avec une structure granulaire grossière et régulière, la composition procatalytique ayant été produite en mettant en contact Mgcl₂, un alcool en C₁ à C₄, un composé du titane et un ester de l'acide phtalique, caractérisé en ce qu'une transestérification a été effectuée à une température comprise entre 110 et 150°C entre l'alcool en C₁ à C₄ et l'ester de l'acide phtalique et en ce que le phtalate de dioctyle (DOP) est utilisé en tant qu'ester de l'acide phtalique.

12. Composition procatalytique selon la revendication 11, caractérisée en ce que la transestérification a été effectuée à une température comprise entre 130°C et 140°C.

13. Composition procatalytique selon la revendication 11 ou 12, caractérisée en ce que la transestérification a été effectuée dans le nonane ou le décane.

14. Composition procatalytique selon la revendication 11, 12 ou 13, caractérisée en ce que l'alcool en C₁ à C₄ est l'éthanol.

15. Composition procatalytique selon l'une quelconque des revendications 11 à 14, caractérisé en ce que le composé du titane est TiCl₄.

16. Composition procatalytique selon l'une quelconque des revendications 11 à 15, caractérisée en ce qu'elle a été produite:
a) en faisant réagir un produit d'addition de MgCl₂ et d'un alcool en C₁ à C₄ avec le composé du titane,
b) en faisant réagir à une température comprise entre 110 et 150°C le produit de l'étape a) avec le phtalate de dioctyle (DOP) dans des conditions dans lesquelles une transestérification a lieu entre le phtalate de dioctyle et l'alcool en C₁ à C₄,
c) en lavant le produit, et
d) en faisant réagir le produit de l'étape c) avec un composé du titane.

17. Composition procatalytique selon l'une quelconque des revendications 11 à 16, caractérisée en ce que 90% en poids de ses particules ont un diamètre moyen avec une longueur supérieure à 200 µm.

18. Composition procatalytique selon l'une quelconque des revendications 11 à 16, caractérisée en ce que ses particules sont des agglomérats.
